# EUROPEAN PATENT SPECIFICATION

(11) **EP 4 286 218 B1**
(45) Date of publication and mention of the grant of the patent: **02.12.2026**
(21) Application number: 23176700.5
(22) Date of filing: 01.06.2023
(51) Int. Cl.: B60N 2/24, B60N 2/42, B60N 2/30, B60N 2/32, B60N 3/06, A61G 3/00

(54) **VEHICULAR CAB PROVIDED WITH AN IMPROVED ANTI-MINE SEAT**
FAHRZEUGKABINE, AUSGESTATTET MIT EINEM VERBESSERTEN MINENSCHUTZSITZ
CABINE DE VÉHICULE POURVUE D'UN SIÈGE ANTI-MINES AMÉLIORÉ

(30) Priority: 03.06.2022 IT 202200011804
(43) Date of publication of application: 06.12.2023
(73) Proprietor: IDV DEFENCE VEHICLES ITALIA S.P.A., 39100 Bolzano (IT)
(72) Inventor: LOMBARDO, Silvio, 10060 ROLETTO (TO) (IT); GOTTARDINI, Mauro, 39100 BOLZANO (IT); FERRARI, Massimo, 39100 BOLZANO (IT)
(74) Representative: Studio Torta S.p.A.

(56) References cited:
- WO-A2-2008/019389
- DE-A1- 4 303 719
- DE-B3- 102004 009 557
- US-A- 3 868 143

## Description

### TECHNICAL FIELD

The present invention relates to a vehicular cab, in particular to a vehicular cab comprising an improved anti-mine seat and an improved anti-mine seat.

The present invention is preferably, although not exclusively, applied to a military vehicle. Reference will be made to such application in the following by way of example.

### STATE OF THE PRIOR ART

Some types of vehicles, such as military vehicles or emergency vehicles in war zones, can be provided with anti-mine seats.

Such seats are made of multilayer materials configured to prevent the transmission of impacts and accelerations due to explosions, such as explosions of mines.

However, military or emergency vehicles in a war zone can also be used for the carriage of material or wounded/sick people who need to be placed lying.

Therefore, military or emergency vehicles in a war zone comprise cabs configured in a material or sick/wounded people carriage mode, i.e. provided with litters or stretchers or, alternatively, in a passenger carriage mode, i.e. provided with anti-mine seats.

It is therefore evident that the reconfiguration of a vehicle between the two aforementioned configurations requires time and is thus a difficult operation, thus not suitable for emergency or war situations.

Example of known anti-mine seats for military or emergency vehicles are disclosed in publications US3868143 A, DE102004009557 B3, DE4303719 A1 or WO2008/019389 A2.

Therefore, the need is felt to provide a vehicular cab for a military or emergency vehicle in a war zone provided with anti-mine seats which can enable the reconfiguration in a quick and facilitated manner.

The object of the present invention is to satisfy the above-described needs in an optimized and cost-effective manner.

### SUMMARY OF THE INVENTION

The aforementioned object is achieved by a vehicular cab and a vehicle as claimed in the appended claims.

### BRIEF DESCRIPTION OF THE DRAWINGS

In order to better understand the present invention, a preferred embodiment is described in the following, by way of non-limiting example and with reference to the accompanying drawings, wherein:
- Figure 1 is a simplified perspective view, with parts removed for clarity, of a vehicular cab according to the invention in a first operating condition;
- Figure 2 is a simplified perspective view, with parts removed for clarity, of a vehicular cab according to the invention in a second operating condition; and
- Figure 3 is a simplified perspective view, with parts removed for clarity, of an anti-mine seat being part of a vehicular cab according to the invention.

### DETAILED DESCRIPTION OF THE INVENTION

In the accompanying figures, a cab 1 is illustrated for a vehicle (not completely illustrated) of military or emergency type in a war zone. The following description will refer to a cab provided with a sick carriage system and to a particular arrangement of the described seats. However, it is evident that the described vehicle can be used for various military or emergency purposes, and the seats could be placed in the cab in different positions.

The cab 1 comprises a plurality of walls 2 defining an inner space 3 extending along a longitudinal axis A of the cab 1 and adapted to be occupied by the passengers of the vehicle, as is described in the following. In particular, the cab 1 comprises a pair of side walls 2', a floor 2'' and a roof 2''' delimiting the inner space 3.

At the front, the cab 1 can be closed or open, i.e. it continues with a driving position of the vehicle, whereas at the back it comprises at least one hatch 2a configured to selectively allow the access to the space 3.

In particular, the cab 1 can be provided with a platform 4 defining a raised surface with respect to the floor 2". In particular, the platform 4 is made stepped and thus defines a raised support surface 4' parallel to the floor 2'' and a vertical surface 4'' joining the support surface 4' to the floor 2'.

The cab 1 advantageously comprises a sick carriage system 5 preferably carried by the platform 4 and configured to house a person in a lying position on the support surface 4'. Consequently, the platform 4 has a length along the longitudinal axis A of the cab 1 such to enable housing a person, therefore of at least 2 mt.

The sick carriage system 5 advantageously comprises at least one guide 6, in the described case a pair of guides 6, carried, preferably in a fixed manner, by the platform 4. In particular, the guides 6 are fixed to the support surface 4' and extend vertically from it.

The sick carriage system 5 further comprises a litter device 7 such as a stretcher, a litter, a spoon or other devices adapted for the carriage of sick people. The litter device 7 is configured to be supported by the guides 6 and preferably connected to them. In particular, it can be connected by means of a sliding connection or other types of movable and removable connections.

Specifically, the sick carriage system 5 is configured to assume a first configuration, wherein the litter device 7 is fixed to the guides 6 for the carriage of a sick person in the space 3, and a second configuration, wherein it is removed from the guides 6 for allowing the handling of the sick person with respect to the space 3.

The cab 1, i.e. the walls 2', the hatch 2a or the platform 4 can be further provided with spaces for housing objects useful for the vehicle or attachment devices for the aforementioned objects, not further described for the sake of brevity.

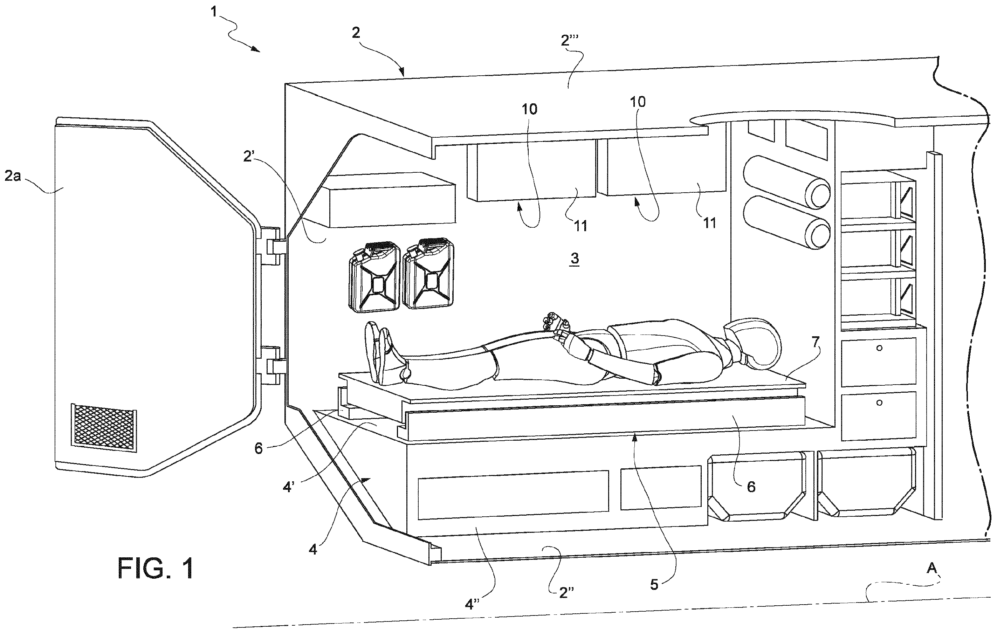

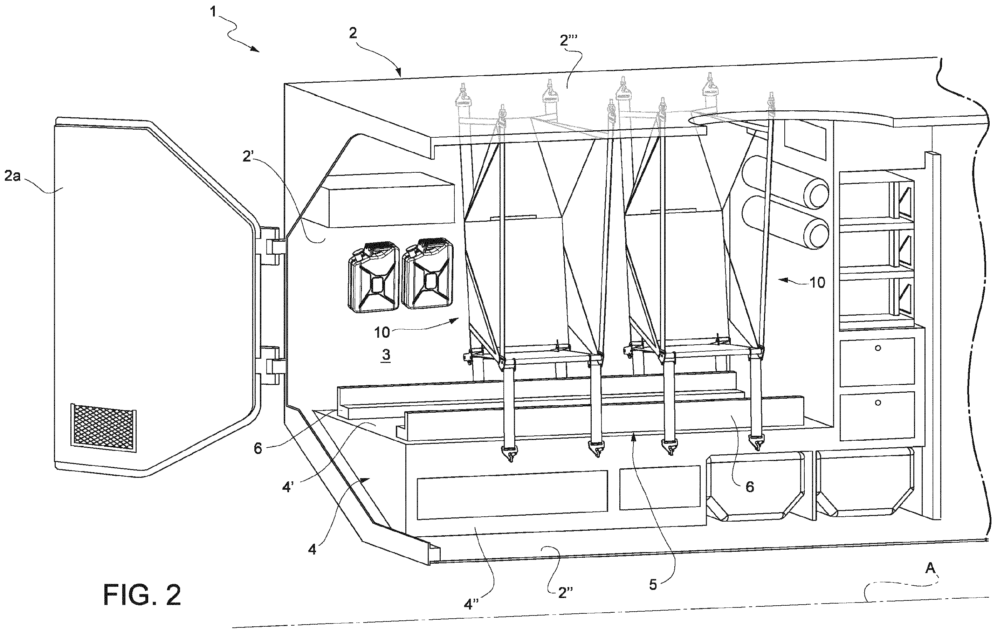

In particular, the cab 1 comprises at least one collapsible anti-mine seat 10 carried by the cab 1 so as to assume a first configuration, closed (Figure 1), wherein it is housed, compacted, at one of the walls 2 of the cab 1 above the sick carriage system 5 and a second configuration, open (Figure 2), wherein it is mounted between the walls 2 of the cab 2 and available for use.

In particular, the collapsible anti-mine seat 10 in the first configuration is housed in a container 11 fixed to one of the side walls 2', above the sick carriage system **5.**

Specifically, the container 11 can be a fabric bag attachable to the wall 2 by means of a removable coupling such as Velcro or buttons or straps.

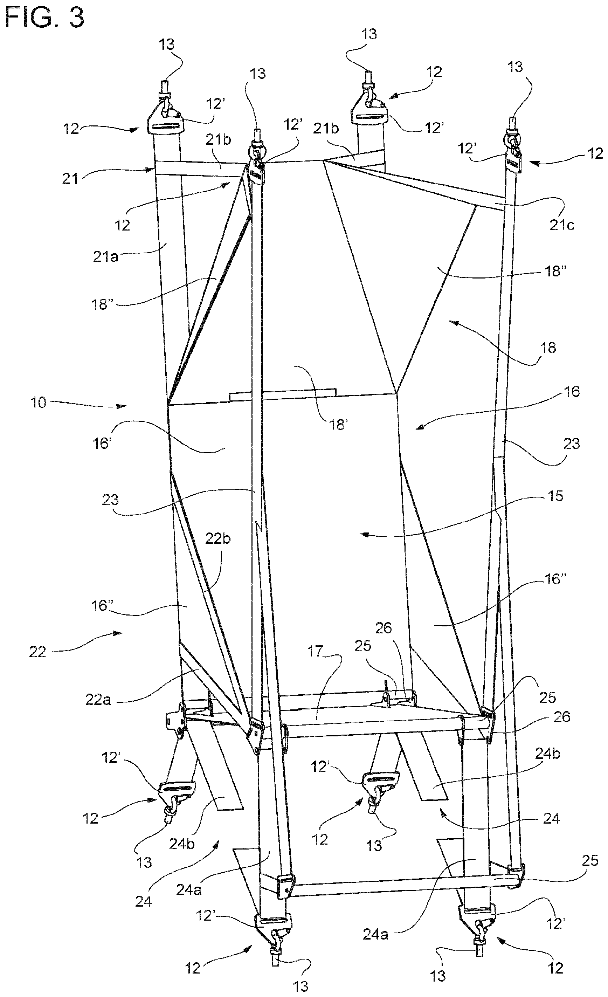

With reference to Figure 3, the collapsible anti-mine seat 10 is specifically illustrated according to the invention.

The collapsible anti-mine seat 10 comprises a plurality of anchorage points 12, advantageously four upper anchorage points and four lower anchorage points.

Each anchorage point 12 essentially comprises a hook element 12' configured to cooperate with a seat 13, such as an eyebolt, rigidly carried by the cab 1.

The collapsible anti-mine seat 10 comprises a plurality of portions 16, 17, 18 made of flexible (i.e. not rigid) anti-mine material which are connected by straps to the upper and lower anchorage points for defining a seating space 15, as is specifically described in the following. For the sake of brevity, the type of anti-mine material will not be described, as it is known and variable per se depending on the type of protection required.

In particular, in the exemplifying embodiment described, the aforementioned plurality of portions 16, 17, 18 comprises:
- An intermediate portion 16 comprising a rear wall 16' with a backrest function connected along side edges, at least along part of their length, to a pair of side walls 16" with side restraint functions;
- A lower portion 17 composed of a single seat wall; and
- An upper portion 18 headrest comprising a rear wall 18' connected along side edges, at least along part of their length and in the particular case along their entire length, to a pair of side walls 18'' with side restraint functions.

More specifically:
- the side portions 16'', 18'' advantageously have a triangular shape;
- the central portion 18' of the upper portion 18 has a quadrangular shape, just like the lower portion 17;
- the central portion 16' of the upper portion 16 has a trapezoidal shape.

As aforementioned, the collapsible anti-mine seat 10 comprises a plurality of straps adapted to connect the aforementioned portions to one or more of the anchorage points 12.

According to the above-described embodiment, with reference to only one side of the collapsible anti-mine seat 10 which advantageously has a symmetric shape with respect to a sagittal surface thereof, comprises:
- a first series of straps 21 connecting the upper portion 16 and the intermediate portion 18 to the plurality of upper anchorage points 12. In particular, such first series of straps 21 comprises a first strap 21a connecting a portion of the joining edge between the upper portion 16 and the intermediate portion 18 directly to the upper and rear anchorage points 12, a second strap 21b connecting the first strap 21a with an end edge joining the main portion and the side portions 16', 16" of the upper portion 16 and a third strap 21c connecting an upper edge of the side portions 16'' with a further series of straps, as is described in the following;
- a second series of straps 22 comprising a first and a second strap 22a, 22b connected along the lower and upper edges respectively of the side portions 16'' of the intermediate portion 16 and configured to connect an edge of the central portion 16' to a support element described in the following;
- a third series of straps 23 comprising a forked strap 23, fixed at an end to one of the front upper anchorage points 12 and forked on the other end for being fixed to the element to which the second series of straps 22 connects and to a further support element described in the following.
- a fourth series of straps 24 comprising a first strap 24a connecting the support element connected to the second series of straps 22 with a front lower anchorage point 12 and a second strap 24b connecting the aforementioned front lower anchorage point 12 with a rear lower anchorage point 12 passing through a further support element described in the following.

As aforementioned, the collapsible anti-mine seat 10 also comprises various support and hinge elements for favouring the attachment of the aforementioned series of straps 21, 22, 23, 24.

In particular, in the described embodiment, the collapsible anti-mine seat 10 comprises:
- A first, a second, a third and a fourth support elements 25, made as tubular elements, parallel to each other, arranged respectively in a lower edge of the central portion 16' of the intermediate portion 16, in the front and rear edges of the seating portion 17 and below the seating portion 17, in the proximity of the front lower anchorage points 12 as footrest.
- A first and a second hinge 26 configured to allow the support for the fourth plurality of straps 24, in particular to allow a point of referral with respect to the anchorage points 12.

Consequently to what described above, the seats 13 which allow the attachment of the anchorage points 12 to the cab 1 are advantageously made on the roof 2''' for the upper anchorage points 12 and on the side wall 2' or on the floor 2'' for the lower anchorage points 12. In particular, the lower anchorage points 12 are fixed to the side wall 12 or to the guides 16 or to the support surface **4',** whereas the front lower anchorage points 12 are fixed to the vertical wall 4" or to the floor 2".

The operation of the embodiment of the above-described cab 1 is as follows.

In a first vehicular configuration, the cab 1 is equipped for the carriage of sick people. Therefore, a sick person can be carried by means of the sick carriage device 5 supported by the platform 4. In such configuration, the collapsible anti-mine seat 10 is placed closed inside the container 11 and thus does not occupy space.

In a second configuration, the cab 1 is equipped for the deposit of passengers in a sitting position. In such configuration, the collapsible anti-mine seat 10 is open and fixed at the ends thereof between the roof 2''' and the floor 2'' of the cab, where the seating portion 17 is above the platform **4,** so that it can be utilized as a seat for the passenger.

In particular, the passage between the first and the second configuration is enabled by opening the container 11 and unfolding the collapsible anti-mine seat 10 which is fixed by means of the anchorage points 12, whereas between the second and the first configuration, it takes place by compacting the seat and reclosing it in the container 11 after freeing the anchorage points 12.

Based on the foregoing, the advantages of a vehicular cab and a seat according to the invention are evident.

Thanks to the vehicular seat according to the invention, it is possible to reconfigure a military or emergency vehicle in a quick manner.

In particular, the vehicular cab can pass from a configuration for the carriage of sick people/goods to a configuration for the carriage of people by simply mounting the collapsible anti-mine seat above the sick carriage device.

The container provided enables restraining the seat in a compact mode inside a predefined space preventing increasing the bulks in the space 3.

The possibility to remove the litter device enables obtaining a wide seating space once the collapsible anti-mine seat is mounted.

Furthermore, the particular arrangement of portions, straps and other elements of the collapsible anti-mine seat provide a strong configuration of the collapsible anti-mine seat in the mounted configuration but also compact when closed inside the container.

Finally, it is clear that modifications and variations can be made to the seat and to the vehicular cab according to the present invention which however do not depart from the scope of protection defined by the claims.

For example, the type of sick carriage device or the shape of the collapsible anti-mine seat, and the components comprised by it, can vary.

Similarly, the number of collapsible anti-mine devices can vary, as well as the arrangement thereof with respect to the walls of the cab.

## Claims

1. Vehicular cab (1) comprising a plurality of walls (2) defining a space (3) extending along a longitudinal axis (A), said walls (2) comprising a pair of side walls (2'), a floor (2") and a roof (2‴), said cab (1) comprising a collapsible anti-mine seat (10), and a container (11) fixed to one of said side walls (2') and/or said roof (2‴), said collapsible anti-mine seat (10) being configured to assume a first configuration, closed, wherein it is housed in said container (11) so as to leave free the space below it, and a second configuration, open, wherein it is mounted between said side walls (2') and/or said roof (2‴) and/or said floor (2") so as to define a seating space (15) above said floor (2"),
wherein said cab (1) comprises a platform (4) raised with respect to said floor (2") and defining a support surface (4'), said cab (1) comprising a sick carriage system (5) carried by said support surface (4'), said collapsible anti-mine seat (10) being placed above said sick carriage system (5).

2. Cab as claimed in claim 1, wherein said collapsible anti-mine seat (10) comprises a plurality of upper and lower anchorage points (12) and a plurality of portions (16, 17, 18) made of anti-mine material connected to one another and to said anchorage points (12), said anchorage points (12) being configured to allow the connection of said collapsible anti-mine seat (10) to one of said side walls (2') and/or said roof (2‴), above, and to one of said side walls (2') and/or said floor (2"), below, in said second configuration.

3. Cab as claimed in claim 2, wherein said anchorage points (12) comprise a hook element (12') integral with said portions (16, 17, 18) configured to cooperate with a seat (13) integral with said cab (1).

4. Cab as claimed in claim 3, wherein said seat (13) is defined by an eyebolt fixed to one of said walls (2).

5. Cab as claimed in any of the preceding claims, wherein said sick carriage system (5) comprises at least one guide element (6) rigidly carried by said platform (4) and a litter device (7) configured to cooperate with said guide element (6) in a selectively movable and removable manner.

6. Cab as claimed in claim 5, wherein said litter device (7) is rigidly carried by said guide element (6) in said first configuration and wherein said litter device (7) is removed from said guide element (6) in said second configuration.

7. Cab as claimed in any of the preceding claims, wherein said container (11) is a bag.

8. Cab as claimed in any of the preceding claims, wherein said collapsible anti-mine seat (10) comprises a plurality of upper and lower anchorage points (12) and a plurality of portions (16, 17, 18) made of flexible anti-mine material connected to one another and to said anchorage points (12), said anchorage points (12) being configured to allow the connection of said collapsible anti-mine seat (10) to one of the walls (2) of said vehicle, said collapsible anti-mine seat (10) comprising at least one plurality of straps (21, 22, 23, 24) connecting said portions (16, 17, 18) to one another and to said anchorage points (12).

9. Cab as claimed in claim 8, wherein said collapsible anti-mine seat (10) comprises support elements (25) and/or hinge elements (26) configured to support the attachment of said at least one plurality of straps (21, 22, 23, 24) between said portions (16, 17, 18).

10. Cab as claimed in claim 9, wherein said support elements (25) comprise tubular elements.

11. Cab as claimed in claim 10, wherein said tubular elements, in use, are parallel to each other.

12. Cab as claimed in claim 9 to 11, wherein said hinge elements (26) are configured to provide a point of referral of said at least one plurality of straps (21, 22, 23, 24) between said anchorage points (12).

13. Cab as claimed in any of claims 8 to 12, wherein said collapsible anti-mine seat (10) comprises:
• An intermediate portion (16) comprising a rear wall (16') with a backrest function connected along side edges, at least along part of their length, to a pair of side walls (16'') with side restraint functions;
• A lower portion (17) comprising a single seat wall; and
• An upper portion (18) headrest comprising a rear wall (18') connected along side edges, at least along part of their length, to a pair of side walls (18") with lateral restraint functions.

14. Cab as claimed in claim 13, wherein:
• said side walls (16", 18") have a triangular shape;
• said rear wall (18') of the upper portion (18) and said lower portion (17) have a quadrangular shape; and
• said rear wall (16') of the intermediate portion (16) has a trapezoidal shape.

15. Military or emergency type vehicle comprising a vehicular cab as claimed in any of the preceding claims.

## Patentansprüche

1. Fahrzeugkabine (1), umfassend eine Vielzahl von Wänden (2), die einen Raum (3) definieren, der sich entlang einer Längsachse (A) erstreckt, wobei die Wände (2) ein Paar Seitenwände (2'), einen Boden (2") und ein Dach (2"') umfassen, wobei die Kabine (1) einen zusammenklappbaren Minenschutzsitz (10) und einen Behälter (11) umfasst, der an einer der Seitenwände (2') und/oder dem Dach (2"') befestigt ist, wobei der zusammenklappbare Minenschutzsitz (10) konfiguriert ist, um eine erste, geschlossene Konfiguration anzunehmen, in der er in dem Behälter (11) untergebracht ist, um den Raum darunter frei zu lassen, und eine zweite, offene Konfiguration anzunehmen, in der er zwischen den Seitenwänden (2') und/oder dem Dach (2"') und/oder dem Boden (2") montiert ist, um einen Sitzraum (15) über dem Boden (2") zu definieren,
wobei die Kabine (1) eine Plattform (4) umfasst, die in Bezug auf den Boden (2") erhöht ist und eine Stützfläche (4') definiert, wobei die Kabine (1) ein Krankenschlittensystem (5) umfasst, das von der Stützfläche (4') getragen wird, wobei der zusammenklappbare Minenschutzsitz (10) über dem Krankenschlittensystem (5) platziert ist.

2. Kabine nach Anspruch 1, wobei der zusammenklappbare Minenschutzsitz (10) eine Vielzahl von oberen und unteren Verankerungspunkten (12) und eine Vielzahl von Abschnitten (16, 17, 18) aus Minenschutzmaterial umfasst, die miteinander und mit den Verankerungspunkten (12) verbunden sind, wobei die Verankerungspunkte (12) konfiguriert sind, um die Verbindung des zusammenklappbaren Minenschutzsitzes (10) mit einer der Seitenwände (2') und/oder dem Dach (2"') darüber und mit einer der Seitenwände (2') und/oder dem Boden (2") darunter in der zweiten Konfiguration zu ermöglichen.

3. Kabine nach Anspruch 2, wobei die Verankerungspunkte (12) ein Hakenelement (12') umfassen, das mit den Abschnitten (16, 17, 18) einstückig ist, die konfiguriert sind, um mit einem Sitz (13) zusammenzuwirken, der mit der Kabine (1) einstückig ist.

4. Kabine nach Anspruch 3, wobei der Sitz (13) durch eine Augenschraube festgelegt ist, die an einer der Wände (2) befestigt ist.

5. Kabine nach einem der vorhergehenden Ansprüche, wobei das Krankenschlittensystem (5) zumindest ein Führungselement (6) umfasst, das starr durch die Plattform (4) und eine Bahrenvorrichtung (7) getragen wird, die dazu konfiguriert ist, um mit dem Führungselement (6) auf eine selektiv bewegliche und entfernbare Weise zusammenzuwirken.

6. Kabine nach Anspruch 5, wobei die Bahrenvorrichtung (7) in der ersten Konfiguration starr von dem Führungselement (6) getragen wird und wobei die Bahrenvorrichtung (7) in der zweiten Konfiguration von dem Führungselement (6) entfernt ist.

7. Kabine nach einem der vorhergehenden Ansprüche, wobei der Behälter (11) eine Tasche ist.

8. Kabine nach einem der vorhergehenden Ansprüche, wobei der zusammenklappbare Minenschutzsitz (10) eine Vielzahl von oberen und unteren Verankerungspunkten (12) und eine Vielzahl von Abschnitten (16, 17, 18) aus flexiblem Minenschutzmaterial umfasst, die miteinander und mit den Verankerungspunkten (12) verbunden sind, wobei die Verankerungspunkte (12) konfiguriert sind, um die Verbindung des zusammenklappbaren Minenschutzsitzes (10) mit einer der Wände (2) des Fahrzeugs zu ermöglichen, wobei der zusammenklappbare Minenschutzsitz (10) mindestens eine Vielzahl von Gurten (21, 22, 23, 24) umfasst, die die Abschnitte (16, 17, 18) miteinander und mit den Verankerungspunkten (12) verbinden.

9. Kabine nach Anspruch 8, wobei der zusammenklappbare Minenschutzsitz (10) Stützelemente (25) und/oder Scharnierelemente (26) umfasst, die konfiguriert sind, um die Befestigung der mindestens einen Vielzahl von Gurten (21, 22, 23, 24) zwischen den Abschnitten (16, 17, 18) zu stützen.

10. Kabine nach Anspruch 9, wobei die Stützelemente (25) röhrenförmige Elemente umfassen.

11. Kabine nach Anspruch 10, wobei die röhrenförmigen Elemente im Gebrauch parallel zueinander sind.

12. Kabine nach Anspruch 9 bis 11, wobei die Scharnierelemente (26) konfiguriert sind, um einen Bezugspunkt der mindestens einen Vielzahl von Gurten (21, 22, 23, 24) zwischen den Verankerungspunkten (12) bereitzustellen.

13. Kabine nach einem der Ansprüche 8 bis 12, wobei der zusammenklappbare Minenschutzsitz (10) Folgendes umfasst:
• einen Zwischenabschnitt (16), umfassend eine Rückwand (16') mit einer Rückenlehnenfunktion, die entlang von Seitenkanten, mindestens entlang eines Teils ihrer Länge, mit einem Paar Seitenwände (16"") mit Seitenrückhaltefunktionen verbunden ist;
• einen unteren Abschnitt (17), umfassend eine einzelne Sitzwand; und
• einen oberen Kopfstützenabschnitt (18), umfassend eine Rückwand (18'), die entlang von Seitenkanten, mindestens entlang eines Teils ihrer Länge, mit einem Paar Seitenwände (18") mit Seitenrückhaltefunktionen verbunden ist.

14. Kabine nach Anspruch 13, wobei:
• die Seitenwände (16", 18") eine dreieckige Form aufweisen;
• die Rückwand (18') des oberen Abschnitts (18) und der untere Abschnitt (17) eine viereckige Form aufweisen; und
• die Rückwand (16') des Zwischenabschnitts (16) eine trapezförmige Form aufweist.

15. Fahrzeug vom militärischen oder Notfalltyp, umfassend eine Fahrzeugkabine nach einem der vorhergehenden Ansprüche.

## Revendications

1. Cabine de véhicule (1) comprenant une pluralité de parois (2) définissant un espace (3) s'étendant selon un axe longitudinal (A), lesdites parois (2) comprenant une paire de parois latérales (2'), un plancher (2'') et un toit (2‴), ladite cabine (1) comprenant un siège anti-mines repliable (10), et un contenant (11) fixé à l'une desdites parois latérales (2') et/ou audit toit (2‴), ledit siège anti-mines repliable (10) étant configuré pour adopter une première configuration, fermée, dans laquelle il est logé dans ledit contenant (11) de manière à libérer l'espace en dessous, et une seconde configuration, ouverte, dans laquelle il est monté entre lesdites parois latérales (2') et/ou ledit toit (2‴) et/ou ledit plancher (2") de manière à définir un espace d'assise (15) au-dessus dudit plancher (2"),
dans laquelle ladite cabine (1) comprend une plateforme (4) surélevée par rapport audit plancher (2") et définissant une surface de support (4'), ladite cabine (1) comprenant un système de civière (5) porté par ladite surface de support (4'), ledit siège anti-mines repliable (10) étant placé au-dessus dudit système de civière (5).

2. Cabine selon la revendication 1, dans laquelle ledit siège anti-mines repliable (10) comprend une pluralité de points d'ancrage (12) supérieurs et inférieurs et une pluralité de portions (16, 17, 18) en matériau anti-mines connectées entre elles et auxdits points d'ancrage (12), lesdits points d'ancrage (12) étant configurés pour permettre la connexion dudit siège anti-mines repliable (10) à l'une desdites parois latérales (2') et/ou audit toit (2‴), en haut, et à l'une desdites parois latérales (2') et/ou audit plancher (2"), en bas, dans ladite seconde configuration.

3. Cabine selon la revendication 2, dans laquelle lesdits points d'ancrage (12) comprennent un élément crochet (12') solidaire desdites portions (16, 17, 18) configuré pour coopérer avec un siège (13) solidaire de ladite cabine (1).

4. Cabine selon la revendication 3, dans laquelle ledit siège (13) est défini par un œillet fixé à l'une desdites parois (2).

5. Cabine selon l'une quelconque des revendications précédentes, dans laquelle ledit système de civière (5) comprend au moins un élément de guidage (6) porté de manière rigide par ladite plateforme (4) et un dispositif de brancard (7) configuré pour coopérer avec ledit élément de guidage (6) de manière sélectivement mobile et amovible.

6. Cabine selon la revendication 5, dans laquelle ledit dispositif de brancard (7) est rigidement porté par ledit élément de guidage (6) dans ladite première configuration et dans laquelle ledit dispositif de brancard (7) est retiré dudit élément de guidage (6) dans ladite seconde configuration.

7. Cabine selon l'une quelconque des revendications précédentes, dans laquelle ledit contenant (11) est un sac.

8. Cabine selon l'une quelconque des revendications précédentes, dans laquelle ledit siège anti-mines repliable (10) comprend une pluralité de points d'ancrage (12) supérieurs et inférieurs et une pluralité de portions (16, 17, 18) en matériau anti-mines flexible connectées entre elles et auxdits points d'ancrage (12), lesdits points d'ancrage (12) étant configurés pour permettre la connexion dudit siège anti-mines repliable (10) à l'une des parois (2) dudit véhicule, ledit siège anti-mines repliable (10) comprenant au moins une pluralité de sangles (21, 22, 23, 24) reliant lesdites portions (16, 17, 18) entre elles et auxdits points d'ancrage (12).

9. Cabine selon la revendication 8, dans laquelle ledit siège anti-mines repliable (10) comprend des éléments de support (25) et/ou des éléments de charnière (26) configurés pour supporter la fixation de ladite au moins une pluralité de sangles (21, 22, 23, 24) entre lesdites portions (16, 17, 18).

10. Cabine selon la revendication 9, dans laquelle lesdits éléments de support (25) comprennent des éléments tubulaires.

11. Cabine selon la revendication 10, dans laquelle lesdits éléments tubulaires, en utilisation, sont parallèles les uns aux autres.

12. Cabine selon la revendication 9 à 11, dans laquelle lesdits éléments de charnière (26) sont configurés pour fournir un point de référence de ladite au moins une pluralité de sangles (21, 22, 23, 24) entre lesdits points d'ancrage (12).

13. Cabine selon l'une quelconque des revendications 8 à 12, dans laquelle ledit siège anti-mines repliable (10) comprend :
• une portion intermédiaire (16) comprenant une paroi arrière (16') avec une fonction de dossier connectée le long des bords latéraux, au moins le long d'une partie de leur longueur, à une paire de parois latérales (16'') à fonctions de retenue latérale ;
• une portion inférieure (17) comprenant une paroi d'assise unique ; et
• une portion supérieure (18) d'appui-tête comprenant une paroi arrière (18') connectée le long des bords latéraux, au moins le long d'une partie de leur longueur, à une paire de parois latérales (18") à fonctions de retenue latérale.

14. Cabine selon la revendication 13, dans laquelle :
• lesdites parois latérales (16", 18") ont une forme triangulaire ;
• ladite paroi arrière (18') de la portion supérieure (18) et ladite portion inférieure (17) ont une forme quadrangulaire ; et
• ladite paroi arrière (16') de la portion intermédiaire (16) a une forme trapézoïdale.

15. Véhicule de type militaire ou d'urgence comprenant une cabine de véhicule selon l'une quelconque des revendications précédentes.
